(19) Europäisches Patentamt
European Patent Office
Office européen des brevets

(11) EP 2 268 591 B1

(12) FASCICULE DE BREVET EUROPEEN

(45) Date de publication et mention de la délivrance du brevet:
**19.12.2018 Bulletin 2018/51**

(21) Numéro de dépôt: **09738351.7**

(22) Date de dépôt: **21.04.2009**

(51) Int Cl.:
***C04B 26/06*** *(2006.01)* ***C04B 26/02*** *(2006.01)*
*C04B 111/00* *(2006.01)* *C04B 111/52* *(2006.01)*

(86) Numéro de dépôt international:
**PCT/FR2009/000467**

(87) Numéro de publication internationale:
**WO 2009/133317 (05.11.2009 Gazette 2009/45)**

# (54) ENDUIT DE FINITION CONVENANT POUR SUPPORT ACOUSTIQUE

ENDBEARBEITUNGSMASSE, DIE FÜR EINEN AKUSTISCHEN TRÄGER GEEIGNET IST

FINISHING COMPOUND SUITABLE FOR AN ACOUSTIC SUPPORT

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **22.04.2008 FR 0802225**

(43) Date de publication de la demande:
**05.01.2011 Bulletin 2011/01**

(73) Titulaire: **Etex Building Performance International SAS**
**84000 Avignon (FR)**

(72) Inventeurs:
- **SERRE, Florence**
  **F-38460 Moras (FR)**
- **FADDOUL, Rita**
  **F-38000 Grenoble (FR)**
- **FAURE, Jean-Michel**
  **F-69600 Oullins (FR)**
- **STOCK, Claude**
  **F-38460 Soleymieu (FR)**

(74) Mandataire: **Vaeck, Elke et al**
**Etex Services NV**
**Kuiermansstraat 1**
**1880 Kapelle-op-den-Bos (BE)**

(56) Documents cités:

| | |
|---|---|
| **EP-A- 0 065 758** | **EP-A- 0 083 960** |
| **WO-A-2007/100510** | **DE-A1- 3 712 382** |
| **DE-A1- 4 324 314** | **DE-A1- 19 614 296** |
| **DE-A1- 19 950 441** | **DE-U1- 9 213 527** |
| **US-A- 4 039 492** | |

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention a pour objet un enduit de finition ayant des propriétés acoustiques.

Les enduits de finition, également appelés enduits de décoration ou encore revêtements de finition ou de décoration, sont généralement utilisés pour revêtir un support afin de lui donner la finition souhaitée correspondant à des critères esthétiques définis.

Or lorsque l'on veut décorer ou améliorer l'esthétique des supports présentant des propriétés acoustiques, il convient d'utiliser des enduits de finition spécifiques qui ne vont pas perturber ou altérer les propriétés acoustiques de leurs supports. Notamment il convient de ne pas obturer la porosité des supports présentant des propriétés acoustiques. En d'autres termes, tous les enduits de finition ne conviennent pas si on veut préserver les propriétés acoustiques du support sur lequel ils sont appliqués. Notamment dans le cas des panneaux acoustiques absorbants utilisés pour réaliser des faux plafonds, il convient d'utiliser des enduits de finition spécifiques.

La demande de brevet EP0065758 décrit un plâtre enduit acoustique poreux comprenant des particules de roches volcanique silicaté de taille supérieure à 3 mm et de particules d'alliage aluminium-fer-silicate de magnésium.

Afin de répondre aux exigences des industriels il est devenu nécessaire de trouver un enduit de finition ayant des propriétés acoustiques améliorées.

Aussi le problème que se propose de résoudre l'invention est de fournir un produit ayant des propriétés acoustiques et utilisable en tant qu'enduit de finition. Dans ce but la présente invention propose un produit comprenant en pourcentage en poids par rapport au poids total du produit, au moins

- au moins 10 % d'eau ;
- 0,1 à 5 % d'agent moussant ;
- 0,1 à 5 % d'agent épaississant ;
- 35 à 70 % de charge monogranulaire ayant un diamètre médian $D_{50}$ supérieure ou égal à 100 $\mu$m et à l'exclusion des charges fines; ledit charge monogranulaire étant du carbonate de calcium ;
- 0,1 à 8 % de fibres synthétiques ou animales ;
- 0,5 à 35 % de liant.

La présente invention propose également, un enduit de finition comprenant le produit décrit ci-avant.

La présente invention a aussi pour objet une plaque de plâtre sur laquelle est appliqué l'enduit de finition selon l'invention.

Enfin, la présente invention a pour objet l'utilisation d'un enduit de finition selon l'invention pour la fabrication d'éléments pour le domaine de la construction.

L'invention offre des avantages déterminants, en particulier le produit selon l'invention préserve les propriétés acoustiques du support sur lequel il est appliqué.

Avantageusement, le produit selon l'invention peut être utilisé comme enduit de finition pour tout type de plaques de plafond, et en particulier les plaques de plâtre pour plafond.

L'invention offre comme autre avantage que le produit selon l'invention peut être employé soit pour ses propriétés acoustiques et / ou pour ses propriétés esthétiques.

Un autre avantage de la présente invention est que le produit selon l'invention peut être appliqué en monocouche, c'est à dire que l'application d'une seule couche de produit selon l'invention suffit pour obtenir les propriétés acoustiques et / ou les propriétés esthétiques nécessaires.

Un autre avantage de la présente invention, est que l'enduit comprend une teneur élevée en eau, ce qui assure une bonne maniabilité de l'enduit, et facilite l'application de l'enduit au cours du chantier.

De plus, le produit selon l'invention présente comme avantage qu'il possède un grand pouvoir couvrant ou garnissant, ce qui permet de masquer les joints réalisés avec un enduit de jointoiement.

De manière tout à fait avantageuse, le produit selon l'invention convient comme enduit de finition pour plafond monolithique. Par plafond monolithique, on entend au sens de l'invention un plafond constitué d'un seul élément. Par exemple il peut s'agir d'un plafond comprenant plusieurs plaques de plâtre solidarisées par un joint et recouvertes d'un enduit de finition, le tout ayant une apparence monolithique, c'est-à- dire constitué d'un seul élément.

Enfin l'invention a pour avantage de pouvoir être mise en oeuvre dans toutes industries, notamment l'industrie du bâtiment et dans l'ensemble des marchés de la construction (bâtiment, génie civil ou usine de préfabrication), dans l'industrie des éléments pour le domaine de la construction, l'industrie de la construction d'éléments en plâtre ou l'industrie cimentière.

D'autres avantages et caractéristiques de l'invention apparaîtront clairement à la lecture de la description et des exemples donnés à titre purement illustratifs et non limitatifs qui vont suivre.

Par l'expression « propriétés acoustiques», on entend aussi bien :

- la capacité à absorber les ondes sonores,
- la capacité à dissiper l'énergie des ondes sonores,
- la capacité à laisser passer les ondes sonores,
- la perméabilité aux ondes sonores,
- la transparence aux ondes sonores,
- la capacité à réduire ou supprimer la réverbération des ondes sonores, ou
- la capacité à réfléchir au minimum les ondes sonores.

Par l'expression « liants », on entend selon la présente invention tout composé ayant la propriété d'apporter de la cohésion à la formulation dans laquelle il est incorporé. Ce liant est destiné à lier des éléments inertes tels que des fibres ou des charges granulaires.

Par l'expression « agent moussant », on entend selon la présente invention tout composé ayant la propriété de favoriser et maintenir la dispersion d'une phase gazeuse dans un liquide, un semi-liquide ou un solide.

Par l'expression « agent mouillant », on entend selon la présente invention tout composé ayant la propriété de modifier la tension superficielle d'un liquide pour favoriser la dispersion des fibres ou d'éviter que les fibres s'agglomèrent.

Par l'expression « agent épaississant », on entend selon la présente invention tout composé permettant ou facilitant le maintien en équilibre de phases physiques hétérogènes.

Par l'expression « gomme », on entend selon l'invention des exsudats végétaux ou des sécrétions extracellulaires d'origine microbiologique.

Par l'expression « $D_{50}$», on entend selon l'invention le diamètre médian des particules dans une distribution granulométrique cumulée en volume (le diamètre médian divise la distribution en deux parts égales, 50% en volume des particules ont une taille inférieure au $D_{50}$ et 50% en volume des particules ont une taille supérieure au $D_{50}$).

Par l'expression "charge monogranulaire", on entend au sens de l'invention une charge monodisperse. Par monodisperse on entend une charge dont l'ensemble des particules qui la compose, possède la même taille. Cela signifie en d'autres termes que la représentation graphique de la distribution granulométrique de la taille des particules (pourcentage en volume en fonction de la taille) ne présente qu'un seul pic (une seule population). Cette définition de "charge monogranulaire" exclue un mélange de particules de taille différentes ou exclue un empilement granulaire de plusieurs particules de tailles différentes.

Le produit selon l'invention ne contient pas de charges fines. Par l'expression «charges fines», on entend selon l'invention des particules dont le diamètre médian $D_{50}$ est strictement inférieur à 100 $\mu$m.

Par l'expression éléments pour le domaine de la construction, on entend selon la présente invention tout élément constitutif d'une construction comme par exemple un sol, un mur, une cloison, un plafond, une poutre, un plan de travail, une corniche.

Tout d'abord l'invention concerne un produit comprenant en pourcentage en poids par rapport au poids total du produit, au moins

- au moins 10 % d'eau ;
- 0,1 à 5 % d'agent moussant ;
- 0,1 à 5 % d'agent épaississant ;
- 35 à 70 % de charge monogranulaire ayant un diamètre médian $D_{50}$ supérieure ou égal à 100 $\mu$m et à l'exclusion des charges fines; ledit charge monogranulaire étant du carbonate de calcium ;
- 0,1 à 8 % de fibres synthétiques ou animales ;
- 0,5 à 35 % de liant.

De préférence le produit, après séchage, est un produit poreux ou perméable à l'air.

Le produit selon l'invention comprend au moins 10 % d'eau, de préférence de 30 à 60 %, plus préférentiellement de 35 à 50 %, encore plus préférentiellement de 40 à 49 % pourcentage en poids par rapport au poids total du produit. L'eau convenant selon l'invention peut être l'eau du robinet.

Le produit selon l'invention comprend de 0,1 à 5 % d'agent moussant, de préférence de 0,5 à 1,2 %, pourcentage en poids par rapport au poids total du produit.

Les agents moussants convenant selon l'invention sont de préférence des tensioactifs non ioniques, anioniques ou amphotères.

Les agents moussants convenant selon l'invention sont de préférence des tensioactifs non ioniques présentant une balance hydrophile/lipophile, nommé ci-après HLB, comprise entre 5 et 18, de préférence comprise entre 7 et 15, encore plus préférentiellement comprise entre 9 et 13.

De préférence, le produit selon l'invention comprend au moins un tensioactif non-ionique. Parmi les tensioactifs non-ioniques convenant selon l'invention, on peut citer les alkylpolysaccharides.

Les alkylpolysaccharides convenant selon l'invention sont ceux comprenant un groupe hydrophobe ayant de

8 à 22 atomes de carbone et un groupe hydrophile ayant de 1 à 10 unités saccharides (par exemple des unités galactose, glucose, fructose, xylose, érythrose, sorbitol, isosorbitol, xylitol, erythritol).

Les alkylpolysaccharides en tant que tensioactifs non-ioniques préférés selon l'invention sont des alkylpolyglucosides ou des alkylpolyglycosides. Préférentiellement, le produit selon l'invention comprend au moins un alkylpolyglucoside en C4 à C22 ou un alkylpolyglycoside en C4 à C22 en tant que tensioactif non-ionique. Plus préférentiellement, le produit selon l'invention comprend au moins un alkylpolyglucoside en C4 à C16 ou un alkylpolyglycoside en C4 à C16 en tant que tensioactif non-ionique. Encore plus préférentiellement, le produit selon l'invention comprend au moins un alkylpolyglucoside en C8 à C12 ou un alkylpolyglycoside en C8 à C12 en tant que tensioactif non-ionique.

Selon une variante de l'invention, le produit selon l'invention comprend au moins un agent moussant de formule générale suivante : R-O-($C_6H_{10}O_5$)n-OH avec

R est un radical alkyl comprenant de 4 à 22 atomes de carbone, linéaire ou ramifié, saturé ou insaturé ; et

n est un nombre entier compris entre 1 et 3, de préférence compris entre 1 et 2.

De préférence, R est un radical alkyle linéaire saturé comprenant de 8 à 12 atomes de carbone.

Selon une autre variante de l'invention, le produit selon l'invention comprend au moins un agent moussant de formule générale suivante :

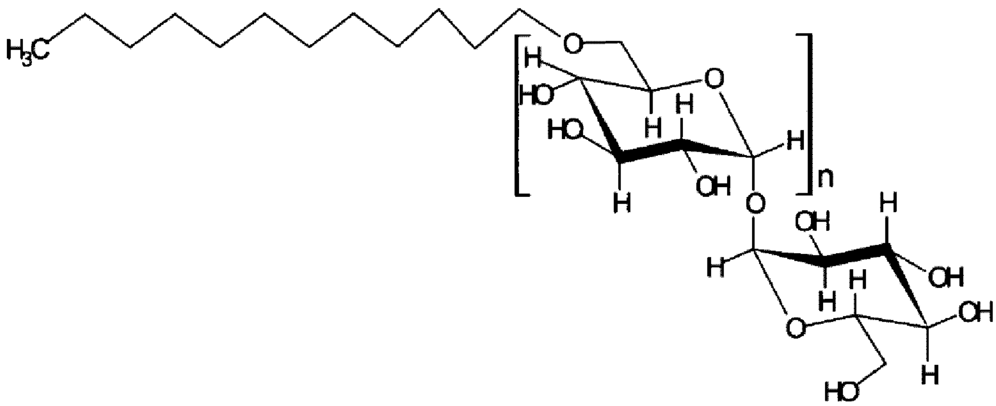

avec n est un nombre entier compris entre 1 et 3, de préférence compris entre 1 et 2.

Les molécules vendues pas Cognis dans la catégorie GLUCOPON conviennent tout particulièrement en tant qu'agent moussant, en particulier le GLUCOPON 600 CSUP et le GLUCOPON 215 CSUP.

Le produit selon l'invention comprend de 0,1 à 5 % d'agent épaississant, de préférence de 0,7 à 1,4 % d'agent épaississant, pourcentage en poids par rapport au poids total du produit.

Les agents épaississants convenant selon l'invention sont de préférence des gommes, de la cellulose ou ses dérivés comme des éthers de cellulose ou la carboxyméthylcellulose, de l'amidon ou ses dérivés, la gélatine, l'agar, les carraghénanes.

De préférence le produit selon l'invention comprend des gommes en tant qu'agent épaississant.

Les gommes en tant qu'agent épaississant convenant selon l'invention sont de préférence choisi parmi les gommes Acacia, Adragante, Caroube, Dextrane, Diutane, Gellane, Guar, Scléroglucane, Xanthane, Welane.

La gomme préférée selon l'invention en tant qu'agent épaississant est la gomme xanthane.

Le produit selon l'invention comprend de 35 à 70 % de charge monogranulaire de taille supérieur ou égal à 100 $\mu$m et à l'exclusion des charges fines, de préférence de 35 à 60 % de charge monogranulaire, plus préférentiellement de 40 à 55 % de charge monogranulaire, encore plus préférentiellement de 40 à 50 % de charge monogranulaire, pourcentage en poids par rapport au poids total du produit.

Le charge monogranulaire convenant selon l'invention est du carbonate de calcium. Le carbonate de calcium convenant selon l'invention possède un $D_{50}$ supérieur ou égal à 100 $\mu$m, de préférence compris entre 100 $\mu$m et 2 mm, plus préférentiellement compris entre 110 $\mu$m et 500 $\mu$m, encore plus préférentiellement compris entre 120 $\mu$m et 250 $\mu$m. Enfin le carbonate de calcium préféré selon l'invention possède un $D_{50}$ égal à 200 $\mu$m, ces valeurs étant mesurées par diffraction laser, de préférence, à l'aide d'un appareil du type granulomètre Malvern MS2000 en voie sèche.

Le produit selon l'invention comprend de 0,1 à 8 % de fibres synthétiques ou animales, de préférence de 1 à 3 % de fibres synthétiques ou animales, pourcentage en poids par rapport au poids total du produit. Les fibres synthétiques convenant selon l'invention peuvent être des fibres de polyamide, des fibres de polypropylène, des fibres de polyester, des fibres de polyacrylonitrile. Les fibres préférées selon l'invention sont des fibres synthétiques, en particulier des fibres de polyamide.

De préférence, le produit selon l'invention ne contient pas de fibres végétales.

Le produit selon l'invention comprend de 0,5 à 35 % de liant, de préférence de 1,5 à 5 % de liant, pourcentage

en poids par rapport au poids total du produit. Le liant permet d'assurer la cohésion du produit selon l'invention. Le liant convenant selon l'invention peut être un polymère acrylique, un polymère styrène acrylique, un polymère vinylique, leur mélange et leurs dérivés. Le liant préféré selon l'invention est un polymère acrylique, en particulier un polymère styrène acrylique.

Le produit selon l'invention peut comprendre en outre des additifs supplémentaires, comme par exemple des agents mouillants, des agents dispersants, des agents coalescents, des agents fluidifiants, des agents bactéricides, des agents fongicides, des solvants lourds, des pigments, des pigments photocatalytiques.

Selon une variante de l'invention, le produit peut comprendre en outre de 0,05 à 1 % d'agent mouillant.

Les agents mouillants convenant selon l'invention sont de préférence des alcools, des polyols et en particulier des diols.

Selon une autre variante de l'invention, le produit peut comprendre en outre 0,01 à 0,5 % d'agent dispersant, de préférence de 0,05 à 0,15 % d'agent dispersant.

Les agents dispersants convenant selon l'invention sont de préférence des polymères carboxyliques ou leurs sels.

Selon une autre variante de l'invention, le produit peut comprendre en outre de 0,01 à 5 % d'agent coalescent.

Les agents coalescents convenant selon l'invention sont de préférence des ethers de glycols.

Selon une autre variante de l'invention, le produit peut comprendre en outre un solvant lourd. Les solvants lourds convenant selon l'invention sont de préférence l'hexylène glycol ou le carbonate de butylène.

Selon une autre variante de l'invention, le produit peut comprendre en outre un ou des pigments seul ou en mélange. Les pigments convenant selon l'invention sont de préférence le dioxyde de titane.

Le produit selon l'invention peut comprendre en outre un ou des pigments photocatalytiques. Parmi les pigments photocatalytiques convenant selon l'invention on peut citer le dioxyde de titane photocatalytique.

Le produit selon l'invention peut être réalisé de la manière suivante en mélangeant les différents constituants du produit selon l'invention à l'eau successivement dans un mélangeur.

Le produit selon l'invention peut être appliqué en 1 seule application. Cela signifie qu'il n'est pas nécessaire d'appliquer plusieurs couches du produit selon l'invention pour obtenir un résultat satisfaisant. Il est à noter qu'un résultat est dit satisfaisant quand la quantité de produit selon l'invention sur un support est comprise entre 0,9 et 3,5 kg/m$^2$.

Le produit selon l'invention présente préférentiellement une quantité de produit après 1 seule application sur un support comprise entre 0,9 et 3,5 kg/m$^2$, de préférence comprise entre 1,0 et 3,0 kg/m$^2$, plus préférentiellement comprise entre 1,25 et 2,5 kg/m$^2$, encore plus préférentiellement comprise entre 1,5 et 2,0 kg/m$^2$.

Le produit selon l'invention a pour avantage de pouvoir être appliqué selon différentes méthodes, comme par exemple la méthode d'application au couteau, la méthode d'application au rouleau, la méthode d'application par pulvérisation.

Parmi ces méthodes, la méthode d'application préférée est la méthode par pulvérisation, en particulier la méthode d'application à la lance à projeter ou à partir d'un appareil de pulvérisation grand volume basse pression ou encore à partir d'un appareil dit "airless".

Lorsque le produit est appliqué sur son support en une couche, dite couche d'application, l'épaisseur de ladite couche est comprise entre 0,5 mm et 2 mm, de préférence comprise entre 0,7 mm et 1,5 mm, encore plus préférentiellement comprise entre 0,8 mm et 1,3 mm.

Après application sur son support, le produit est de préférence laissé à sécher, à température ambiante.

Le produit selon l'invention présente après évaporation de l'eau une résistance à l'écoulement de l'air supérieure ou égale à 800 mks rayls (Ns m$^3$), de préférence comprise entre 800 et 6000 mks Rayls, préférentiellement comprise entre 950 et 5000 mks rayls, encore plus préférentiellement comprise entre 1000 et 3500 mks rayls mesurée selon la norme ASTM C522-87.

Après séchage, le produit selon l'invention est de préférence un produit poreux ou encore perméable à l'air. Par perméable à l'air, on entend un produit présentant une résistance à l'écoulement de l'air supérieure ou égale à 800 mks rayls (Ns m$^3$), de préférence comprise entre 800 et 6000 mks rayls, préférentiellement comprise entre 950 et 5000 mks rayls, encore plus préférentiellement comprise entre 1000 et 3500 mks rayls mesurée selon la norme ASTM C522-87.

La présente invention a également pour objet un enduit de finition comprenant le produit selon l'invention tel que décrit ci-dessus.

L'enduit de finition selon l'invention est de préférence un enduit poreux ou encore perméable à l'air. Par perméable à l'air, on entend un enduit présentant une résistance à l'écoulement de l'air supérieure ou égale à 800 mks rayls (Ns m$^3$), de préférence comprise entre 800 et 6000 mks rayls, préférentiellement comprise entre 950 et 5000 mks rayls, encore plus préférentiellement comprise entre 1000 et 3500 mks rayls mesurée selon la norme ASTM C522-87.

L'enduit de finition selon l'invention est de préférence un enduit ne modifiant pas ou peu les propriétés acoustiques dudit support sur lequel il est appliqué. L'enduit de finition selon l'invention est de préférence un enduit ne modifiant pas la perméabilité à l'air du support sur lequel il est appliqué.

L'enduit selon l'invention peut être employé soit pour ses propriété acoustiques et / ou pour ses propriétés

esthétiques.

L'enduit selon l'invention peut être appliqué sur de nombreux supports, notamment par exemple un sol, un mur, une cloison, un plafond, une poutre, un plan de travail, une corniche, et quelque soit le type de matériau du support. La présente invention a également pour objet un panneau à base de gypse, en particulier une plaque de plâtre, sur lequel est appliqué l'enduit de finition selon l'invention tel que décrit ci-dessus.

Enfin la présente invention a également pour objet l'utilisation d'un enduit de finition selon l'invention pour la fabrication d'éléments pour le domaine de la construction.

Les exemples suivants illustrent l'invention sans en limiter la portée.

## EXEMPLES

**Réactifs utilisés** :

Les réactifs utilisés dans les différentes formulations du produit selon l'invention sont réunis dans le tableau I ci-dessous.

TABLEAU I

| | **Dénomination** | **Nom chimique** | **Fournisseur** |
|---|---|---|---|
| **Solvant** | Eau du robinet | Eau | |
| **Agent Dispersant** | Coatex P90 | Polycarboxylate d'ammonium | Coatex |
| **Agent Mouillant** | Envirogem 360 | Diol | Air products |
| | Surfynol 104 | Diol acétylénique | Air products |
| | Roysol Lac | | |
| **Agent Moussant** | Empimin MH | Alkyl sulfoccinamate de sodium | Huntsman |
| | Glucopon 215 CSUP | Alkyl Polyglucoside | Cognis |
| | Nansa LSS38/AS | Oléfine Sulfonate | Huntsman |
| **Agent Epaississant** | Actigum CS 6 | Scléroglucane | Cargill |
| | Satiaxane CX90T | Gomme de Xanthane | Cargill |
| | Kelzan RD | Gomme de Xanthane | Kelco |
| **Charge monogranulalre** | Durcal 130 | Carbonate de calcium | Omya |
| | Poraver 0.5-1 mm | Billes de verre | Poraver |
| **Fibres** | Polyacrylonitrile | Fibres de polyacrilonitrile | Warwick |
| | Perlon 3/3.2 | Fibres de polyamide | |
| | PP Stavon 18/4 | Fibres de polypropylène | Trevos |
| | Axilat NYL 0.8 | Fibres de polyamide | Rhodia |
| | Rhoximat NYL 4 mm | Fibres de polyamide | Rhodia |
| **pigment** | Tiona 568 | Dioxyde de titane | Millenium chemicals |
| | Tiona 595 | Dioxyde de titane | Millenium chemicals |
| **Liant** | Acronal S790 | Latex styrène/acrylique | BASF |
| | Acronal S559 | Latex styrène/acrylique | BASF |
| **Agent Coalescent** | Dowanol PnB | Ether glycol | Dow chemicals |
| **Solvant Lourd** | Jeffsol BC | Carbonate de butylène | Hunstmann |
| **Biocide** | Mergal 723K | Solution d'isothiazolinone et d'un composé d'amine gras | Troy |
| | Acticide MBS | Isothiazolinone protégé | Thor |

**Matériels:**

- Mélangeur Disperseur Rayneri de laboratoire équipé d'une pâle de dispersion.
- Mélangeur Turbodisperseur modèle Argon AI7.5 équipé d'un arbre mélangeur à vitesse variable de marque Zanelli.
- Lance à projeter : ensemble de projection modèle 6P de marque Europro constitué d'une machine avec une trémie en inox monobloc et un moteur asynchrone couplé à un réducteur, entraînant une pompe à vis volumétrique, associé à un compresseur et à une lance à projeter équipée d'une buse de diamètre 3 mm.

**Mode opératoire** : **réalisation de l'enduit de l'exemple 1 selon l'invention** :

Dans le bol du mélangeur, 41.6 parties d'eau du robinet sont introduites.

Sous une agitation de 200 tr/min, 0,1 partie d'agent dispersant Coatex P90, 0,1 partie d'agent mouillant Envirogem 360, 1 partie d'agent moussant Glucopon 215 CSUP (solution aqueuse à 30% massique), 0,4 partie de solvant lourd Jeffsol BC sont introduites successivement et en 5 minutes.

L'agitation est augmentée progressivement jusqu'à 1280 tr/min tout en ajoutant 0.9 partie d'agent épaississant Kelzan RD, 45 parties de charge monogranulaire Durcal 130, 5 parties de pigment dioxyde de titane Tiona 595, 2 parties de fibre Axylat 0.8 et 3 parties de liant Acronal S559 en 11 minutes. Le mélange est agité encore pendant 3 minutes pour générer la mousse.

L'agitation est augmentée jusqu'à 1500 tr/min tout en ajoutant 0,5 parties de biocide Acticide MKE (N) et 0,4 partie de biocide Acticide MBS en 1 minute.

Les quantités des constituants sont données en pourcentage en poids par rapport au poids total du produit.

**Enduits selon l'invention** :

Différents enduits selon l'invention ont été réalisés, produits 2 à 12, selon le mode opératoire de l'exemple 1 décrit ci-dessus. Le tableau II ci-dessous décrit la composition chimique des enduits 1 à 12 en pourcentage en poids par rapport au poids total du produit.

TABLEAU II

| Famille | Composé | 1 | 2 | 3 | 4 | 5 | 6 | 7 | 8 | 9 | 10 | 11 | 12 |
|---|---|---|---|---|---|---|---|---|---|---|---|---|---|
| Solvant | Eau | 41.60 | 12.08 | 41.66 | 42.51 | 42.91 | 43.24 | 43.71 | 44.50 | 46.00 | 25.67 | 34.19 | 44.50 |
| dispersant | Coatex P90 | 0.10 | 0.12 | 0.10 | 0.10 | 0.10 | 0.10 | | | | 0.12 | 0.10 | 0.10 |
| Mouillant | Envirogem 360 | 0.10 | 0.10 | 0.10 | 0.10 | 0.10 | 0.10 | | | | 0.10 | | 0.10 |
| | Surfynol 104 | | | | | | | 0.10 | | 0.10 | | | |
| | Roysol Lac | | | | | | | | | | | 0.10 | |
| Agent | Empimin MH | | | | | 0.75 | | | | | | | |
| Poussant | Glucopon 215 CSUP | 1.00 | 1.00 | 1.00 | 1.00 | | 0.75 | 2.00 | 1.00 | 2.00 | 1.00 | 0.20 | 0.50 |
| | Nansa LSS38/AS | | | | | 0.75 | | | | | | | |
| Epaississant | Actigum CS 6 | | | | | | | 1.00 | | 0.40 | | | |
| | Kelzan RD | 0.90 | 0.40 | 0.90 | 0.90 | 0.75 | 0.75 | | | | 0.50 | 0.59 | 1.10 |
| | Satiaxane CX90T | | | | | | | | 0.50 | | | | |
| Charge | Durcal 130 | 45.00 | 46.27 | 44.96 | 45.00 | 43.16 | 4349 | 43.71 | 43.75 | 40.00 | 46.31 | 51.54 | 42.00 |
| Fibre | Polyacrytonitrile | | | | 2.00 | | | | | | | | |
| | Perlon 3/3.2 | | | 2.00 | | | | | | | | | |
| | PP Stavon 18/4 | | | | | | | | | | | 1.98 | |
| | Axilat NYL0.8 | 2.00 | 2.00 | | | 2.00 | 2.01 | | 2.00 | | 2.00 | | 2.00 |
| | Rhoximat NYL 0.8 | | | | | | | 1.00 | | 3.00 | | | |
| pigment | Tiona 568 | 5.00 | | 5.00 | 5.00 | 5.24 | 5.28 | 4.00 | 5.00 | 4.00 | 5.00 | 4.96 | 5.00 |
| Tiona | Tiona 595 | | 5.00 | | | | | | | | | | |
| Liant | Acronal S790 | | | | | | | 4.00 | 3.00 | 4.00 | 18.00 | 18.00 | |
| | Acronal S559 | 3.00 | 31.66 | 3.00 | 3.00 | 3.74 | 3.77 | | | | | 6.34 | 4.30 |
| Coalescent | Dowanol PnB | | | | | | | 0.50 | 0.25 | 0.50 | | | |
| Solvant Lourd | Jeffsol BC | 0.40 | 0.40 | 0.40 | 0.40 | 0.50 | 0.50 | | | | 0.40 | | 0.40 |
| Biocide | Mergal 723K | | 0.08 | | | | | | | | | | |
| | Acticide MKE(N) | 0.50 | 0.50 | 0.50 | | | | | | | 0.50 | | |

(suite)

| Famille | Composé | 1 | 2 | 3 | 4 | 5 | 6 | 7 | 8 | 9 | 10 | 11 | 12 |
|---|---|---|---|---|---|---|---|---|---|---|---|---|---|
| | Acticide MBS | 0.40 | 0.40 | 0.40 | | | | | | | 0.40 | | |
| | | 100.00 | 100.00 | 100.00 | 100.00 | 100.00 | 100.00 | 100.00 | 100.00 | 100.00 | 100.00 | 100.00 | 100.00 |

**Mesure de la perméabilité à l'air de chaque enduit** :

La perméabilité à l'air est estimée à partir d'une mesure de résistivité à l'air Ces mesures sont faites grâce à un résistivimètre communément appelé ohmmètre. La différence de pression en inches d'eau est mesurée pour un débit d'air de 17% entre l'échantillon et une plaque de verre témoin au travers d'une empreinte de 5 cm de diamètre. A chaque fois, 5 mesures correspondantes à 5 valeurs différentes de débit d'air sont réalisées. Plus la valeur obtenue est grande, plus on résiste au passage de l'air, l'échantillon sera alors moins poreux et moins perméable.

$$(\text{Perméabilité mks rayls}) = (\Delta P_{\text{inch H20}} \times 149.4) / 1.49 \times 10^{5} \times (5.10^{-2})^{2} / 4$$

Les résultats sont présentés dans le tableau III suivant :

TABLEAU III

| | 1 | 2 | 3 | 4 | 5 | 6 | 7 | 8 | 9 | 10 | 11 | 12 |
|---|---|---|---|---|---|---|---|---|---|---|---|---|
| Perméabilité (mks rayls) | 650 | 1545 | 1683 | 2431 | 1457 | 2618 | 1240 | 1063 | 1063 | 2244 | 650 | 1909 |

Les enduits 1 à 12 selon l'invention sont perméables à l'air.

**Essai de mesures acoustiques** :

Les enduits 13 à 16 ont été appliqués sur des plaques de plâtre ayant des propriétés acoustiques. Les enduits 13, 15, et 16 sont selon l'invention. L'enduit 14 n'est pas selon l'invention. Ces enduits ont été appliqués à l'aide d'une lance à projeter (Vitesse de pompe : 2,5 et pression d'atomisation : 30 psi) sur une plaque de plâtre ayant un coefficient de réduction du bruit égal à 0,8 (NRC = 0,8) et présentant une perméabilité de 1132 mks rayls. L'ensemble est nommé système.

La méthode de mesure du coefficient de réduction du bruit (NRC) est la méthode décrite dans la norme ASTM C423-02A, en utilisant une salle dont le volume est de 114m3.

Des mesures acoustiques ont été réalisées sur ces systèmes.

TABLEAU IV

| | Formules | 13 | 14 | 15 | 16 |
|---|---|---|---|---|---|
| Solvant | Eau | 41.61 | 49.78 | 41.61 | 41.61 |
| Dispersant | Coatex P90 | 0.09 | 0.04 | 0.1 0 | 0.10 |
| Mouillant | Enviroqem 360 | 0.09 | 0.08 | 0.10 | 0.10 |
| Agent Moussant | Empimin MH | | 0.25 | | |
| 9 | Glucopon 215 CSUP | 1.00 | | 1.00 | 1.00 |
| | Nansa LSS38/AS | | 0.25 | | |
| Epaississant | Kelzan RD | 0.90 | 0.70 | 0.90 | 0.90 |
| Charge | Durcal 130 | 45.00 | 33.02 | 45.00 | 45.00 |
| | Poraver 0,5-1 | | 5.77 | | |
| Fibre | Axilat NYL0,8 | 2.00 | 2.00 | 2.00 | 2.00 |
| Pigment | Tiona 568 | 5.00 | 4.00 | 5.00 | 5.00 |
| Liant | Acronal S559 | 3.00 | 3.00 | 3.00 | 3.00 |
| Solvant Lourd | Jeffsol BC | 0.41 | 0.20 | 0.40 | 0.40 |
| Biocide | Actidde MKE(N) | 0.50 | 0.50 | 0.50 | 0.50 |
| | Acticide MBS | 0.41 | 0.40 | 0.40 | 0.40 |
| | | 100.00 | 100.00 | 100.00 | 100.00 |

(suite)

| | Formules | 13 | 14 | 15 | 16 |
|---|---|---|---|---|---|
| | | | | | |
| Poids d'application | $g/m^2$ | 830 | 750 | 1012 | 927 |
| Perméabilité | mks rayls | 1914 | 1417 | 1162 | 1634 |
| NRC système (plaque + enduit) | | 0.70 | 0.10 | 0.75 | 0.80 |

Les enduits 13 à 16 sont perméables à l'air, et ne modifient pas ou très peu les propriétés acoustiques du support sur lequel ils sont appliqués. En effet la plaque de plâtre non enduite présente un NRC de 0,8, et la plaque enduite avec les enduits 13 à 16 (système) présentent un NRC compris entre 0.70 et 0,80.

## Revendications

**1.** Produit comprenant en pourcentage en poids par rapport au poids total du produit, au moins

- au moins 10 % d'eau ;
- 0,1 à 5 % d'agent moussant ;
- 0,1 à 5 % d'agent épaississant ;
- 35 à 70 % de charge monogranulaire ayant un diamètre médian $D_{50}$ supérieure ou égal à 100 $\mu$m et à l'exclusion des charges fines dont le diamètre médian $D_{50}$ est strictement inférieur à 100 $\mu$m, monogranulaire signifiant que la représentation graphique de la distribution granulométrique de la taille des particules (pourcentage en volume en fonction de la taille) ne présente qu'un seul pic (une seule population); ledit charge monogranulaire étant du carbonate de calcium ;
- 0,1 à 8 % de fibres synthétiques ou animales ;
- 0,5 à 35 % de liant.

**2.** Produit selon la revendication 1 **caractérisé en ce qu'**il comprend de 0,7 à 1,4 % d'agent épaississant.

**3.** Produit selon la revendication 1 **caractérisé en ce qu'**il comprend de la gomme xanthane.

**4.** Produit selon la revendication 1 **caractérisé en ce qu'**il comprend en outre 0,01 à 0,5 % d'agent dispersant, de préférence de 0,05 à 0,15 % d'agent dispersant.

**5.** Produit selon la revendication 1 **caractérisé en ce que** le $D_{50}$ dudit carbonate de calcium est compris entre 100 $\mu$m et 2 mm.

**6.** Produit selon la revendication 1 **caractérisé en ce qu'**il comprend des fibres polyamides en tant que fibres synthétiques.

**7.** Produit selon la revendication 1 **caractérisé en ce qu'**il comprend en outre de 0,05 à 1 % d'agent mouillant.

**8.** Produit selon la revendication 1 **caractérisé en ce qu'**il présente une quantité de produit après 1 seule application sur un support comprise entre 0,9 et 3,5 $kg/m^2$.

**9.** Produit selon la revendication 1 **caractérisé en ce qu'**il comprend en outre de 0,01 à 5 % d'agent coalescent.

**10.** Produit selon la revendication 1 **caractérisé en ce qu'**il comprend en outre un ou des pigments photocatalytiques.

**11.** Utilisation du produit selon l'une des revendications 1 à 10 comme enduit de finition.

**12.** Utilisation selon la revendication 11 pour la fabrication d'éléments pour le domaine de la construction.

**13.** Panneau à base de gypse sur lequel est appliqué un enduit de finition comprenant un produit selon l'une des revendications 1 à 10.

**Patentansprüche**

1. Produkt, umfassend in Gewichtsprozent, bezogen auf das Gesamtgewicht des Produkts, mindestens

   - mindestens 10 % Wasser;
   - 0,1 bis 5 % Schaummittel;
   - 0,1 bis 5 % Verdickungsmittel;
   - 35 bis 70 % einer monogranularen Charge mit einem mittleren Durchmesser $D_{50}$ größer oder gleich 100 $\mu$m und unter Ausschluss feiner Chargen, deren mittlerer Durchmesser $D_{50}$ streng kleiner ist als 100 $\mu$m wobei monogranular bedeutet, dass die grafische Darstellung der granulometrischen Verteilung der Größe von Partikeln (Volumenprozentsatz als Funktion der Größe) nur einen einzelnen Peak (eine einzige Population) aufweist; wobei die monogranulare Charge Calciumcarbonat ist;
   - 0,1 bis 8 % synthetische oder tierische Fasern;
   - 0,5 bis 35 % Bindemittel.

2. Produkt nach Anspruch 1, **dadurch gekennzeichnet, dass** dieses von 0,7 bis 1,4 % Verdickungsmittel umfasst.

3. Produkt nach Anspruch 1, **dadurch gekennzeichnet, dass** dieses Xanthan-Gummi umfasst.

4. Produkt nach Anspruch 1, **dadurch gekennzeichnet, dass** dieses außerdem 0,01 bis 0,5 % Dispergiermittel, vorzugsweise von 0,05 bis 0,15 % Dispergiermittel, umfasst.

5. Produkt nach Anspruch 1, **dadurch gekennzeichnet, dass** der $D_{50}$ des Calciumcarbonats zwischen 100 $\mu$m und 2 mm beträgt.

6. Produkt nach Anspruch 1, **dadurch gekennzeichnet, dass** dieses Polyamidfasern als synthetische Fasern umfasst.

7. Produkt nach Anspruch 1, **dadurch gekennzeichnet, dass** dieses außerdem von 0,05 bis 1 % Netzmittel umfasst.

8. Produkt nach Anspruch 1, **dadurch gekennzeichnet, dass** dieses eine Menge an Produkt nach 1 einzigen Anwendung auf einem Träger zwischen 0,9 und 3,5 kg/$m^2$ aufweist.

9. Produkt nach Anspruch 1, **dadurch gekennzeichnet, dass** dieses außerdem von 0,01 bis 5 % Koaleszenzmittel umfasst.

10. Produkt nach Anspruch 1, **dadurch gekennzeichnet, dass** dieses außerdem ein oder mehrere fotokatalytische Pigmente umfasst.

11. Verwendung des Produkts nach einem der Ansprüche 1 bis 10, als Endbearbeitungsmasse.

12. Verwendung nach Anspruch 11, zur Herstellung von Elementen für das Bauwesen.

13. Platte auf der Basis von Gipsen, auf welcher eine Endbearbeitungsmasse, umfassend ein Produkt nach einem der Ansprüche 1 bis 10, aufgebracht ist.

**Claims**

1. Product comprising, as percent by weight relative to the total weight of the product, at least

   - at least 10% of water;

- 0.1% to 5% of foaming agent;
- 0.1% to 5% of thickener;
- 35% to 70% of monogranular filler having a median diameter $D_{50}$ greater than or equal to 100 μm and with exclusion of the fine fillers of which the median diameter $D_{50}$ is strictly less than 100 μm, monogranular meaning that the graphic representation of the particle size distribution of the size of the particles (percent by volume as a function of the size) exhibits just one peak (a single population); said monogranular filler being calcium carbonate;
- 0.1% to 8% of synthetic or animals fibres;
- 0.5% to 35% of binder.

**2.** Product according to Claim 1, **characterized in that** it comprises from 0.7% to 1.4% of thickener.

**3.** Product according to Claim 1, **characterized in that** it comprises xanthan gum.

**4.** Product according to Claim 1, **characterized in that** it also comprises 0.01% to 0.5% of dispersing agent, preferably from 0.05% to 0.15% of dispersing agent.

**5.** Product according to Claim 1, **characterized in that** the $D_{50}$ of said calcium carbonate is between 100 μm and 2 mm.

**6.** Product according to Claim 1, **characterized in that** it comprises polyamide fibres as synthetic fibres.

**7.** Product according to Claim 1, **characterized in that** it also comprises from 0.05% to 1% of wetting agent.

**8.** Product according to Claim 1, **characterized in that** it provides an amount of product after just 1 application on a support of between 0.9 and 3.5 $kg/m^2$,

**9.** Product according to Claim 1, **characterized in that** it also comprises from 0.01% to 5% of coalescent.

**10.** Product according to Claim 1, **characterized in that** it also comprises one or more photocatalytic pigments.

**11.** Use of the product according to one of Claims 1 to 10, as finishing coating.

**12.** Use according to Claim 11, for the production of elements for the construction field.

**13.** Gypsum-based panel on which a finishing coating comprising a product according to one of Claims 1 to 10 is applied.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0065758 A